Europäisches Patentamt

European Patent Office

Office européen des brevets

(19)

(11) Veröffentlichungsnummer: **0 378 527 B1**

## (12) EUROPÄISCHE PATENTSCHRIFT

(45) Veröffentlichungstag der Patentschrift :
21.08.91 Patentblatt 91/34

(51) Int. Cl.⁵ : **B60T 1/06, B62D 11/10**

(21) Anmeldenummer : 88902129.1

(22) Anmeldetag : 02.03.88

(86) Internationale Anmeldenummer :
PCT/EP88/00153

(87) Internationale Veröffentlichungsnummer :
WO 88/06990 22.09.88 Gazette 88/21

(54) **BREMSANLAGE FÜR VOLLKETTENFAHRZEUGE.**

(30) Priorität : 10.03.87 DE 3707588

(43) Veröffentlichungstag der Anmeldung :
25.07.90 Patentblatt 90/30

(45) Bekanntmachung des Hinweises auf die
Patenterteilung :
21.08.91 Patentblatt 91/34

(84) Benannte Vertragsstaaten :
DE FR GB IT

(56) Entgegenhaltungen :
DE-A- 2 114 951
DE-A- 3 538 002
GB-A- 2 118 644
US-A- 4 377 094
Soldat & Technik, Band 4, April 1967, T. Icken:
"Das Fahrgestell des Leopard", Seiten
187-188

(73) Patentinhaber : ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder : MAURER, Norbert
Weidenring 27
W-7990 Friedrichshafen (DE)
Erfinder : KONTNY, Horst
Amthausstra e 51
W-7994 Langenargen (DE)
Erfinder : BINGER, Bernhard
Untere Breite Stra e 5
W-7980 Ravensburg (DE)

## Beschreibung

Diese Erfindung betrifft eine Bremsanlage für Vollkettenfahrzeuge nach dem Oberbegriff von Anspruch 1.

Aus DE-C-2114951 ist ein Bremssystem für ein Kettenfahrzeug mit einem Überlagerungs-Lenkgetriebe bekannt, das aus einer hydrodynamischen Bremse und zwei Reibungsbremsen besteht, wobei die hydrodynamische Bremse im Kraftfluß vor und die Reibungsbremsen hinter dem Überlagerungs-Lenkgetriebe angeordnet sind. In bekannter Weise werden für die hydrodynamische und die beiden Reibungsbremsen für Kühlung und Betätigung das gleiche Getriebeöl benutzt. Auch die Ansteuerung beider Bremsen erfolgt von einer gemeinsamen Einrichtung so, daß vorzugsweise zunächst die hydrodynamische Bremse wirksam ist und die beiden Reibungsbremsen in Abhängigkeit vom Bremsmoment der hydrodynamischen Bremse zugeschaltet werden.

Aus der Zeitschrift "Soldat und Technik" 4, April 1967, Seite 187-188 ist eine Bremsanlage für ein Kettenfahrzeug mit einem Überlagerungs-Lenkgetriebe und einer Fuß- und Handbremse bekannt, wobei die sogenannte Teilscheibenbremse zwischen dem Getriebe und dem Seitenvorgelege angeordnet ist und die Fußbremse hydraulisch mit Motoröl und die Handbremse, die gleichzeitig Feststellbremse ist, mechanisch betrieben wird.

Und schließlich ist aus der DE-A-3538002 eine moderne Getriebeanlage für ein Vollkettenfahrzeug bekannt mit vorgefertigten und vorgeprüften Baugruppen, wo z.B. der Retarder in Verbindung mit dem Schaltgetriebe und die beiden Summierungsgetriebe mit dem jeweiligen seitlichen Abschlußdeckel als Baugruppen ausgeführt sind. Die in dieser Schrift nicht dargestellten Reibungsbremsen sind, wie schon erläutert, zwischen dem Seitenvorgelege, auf dem die Gleisketten gelagert sind, und dem Getriebegehäuse, also außerhalb der Baugruppe Seitendeckel mit Summierungsgetriebe, angeordnet.

Alle diese Ausführungen haben sich bewährt, erfordern jedoch einen hohen Bauaufwand bezogen auf die gesamte Bremsanlage, und alle Ausführungen beeinträchtigen das Lenkverhalten bei Vollbremsungen und bei Bremsungen im Bereich geringer Geschwindigkeiten.

Ausgehend von der DE-C-2114951 ist es Aufgabe der Erfindung, eine Bremsanlage nach dem Oberbegriff von Anspruch 1 in bezug auf Bauaufwand zu optimieren und so zu gestalten, daß die Bremsbetätigung keinerlei Lenkbeeinträchtigung verursacht.

Diese Aufgabe wird mit den kennzeichnenden Merkmalen von Anspruch 1 erfüllt.

Durch die Verlagerung der Reibungsbremsen vor das jeweilige Summierungsgetriebe ist es möglich, die Lenkbeeinträchtigung zu beheben. Besonders im Bereich kleiner Fahrgeschwindigkeiten ist die Verbesserung sehr wirksam, weil in diesem Bereich der Anteil der Reibungsbremse am Gesamtbremsmoment sehr hoch ist. Werden zwei Reibungsbremsen vorgesehen, die unmittelbar mit dem Antriebsrad des zugehörigen Summierungsgetriebes verbunden sind, kann die Dimensionierung so erfolgen, daß die Reibungsbremse in der Baugruppe Seitendeckel mit Summierungsgetriebe angeordnet wird. Die erschwerte Zugängigkeit zur Reibungsbremse, die sich bei einer Anordnung innerhalb des Getriebegehäuses der Getriebeanlage an und für sich ergibt, ist damit wieder aufgehoben. Die Baugruppe Seitendeckel mit Summierungsgetriebe und Reibungsbremse ist sehr leicht vom Gesamtgetriebegehäuse abziehbar und der Zugang zur Bremse dadurch leicht möglich. Werden die Bremslamellen der Reibungsbremse in einer zweiten Funktion auch noch für die Feststellbremse genutzt und wird Anordnung innerhalb des Getriebegehäuses der Getriebeanlage an und für sich ergibt, ist damit wieder aufgehoben. Die Baugruppe Seitendeckel mit Summierungsgetriebe und Reibungsbremse ist sehr leicht vom Gesamtgetriebegehäuse abziehbar und der Zugang zur Bremse dadurch leicht möglich. Werden die Bremslamellen der Reibungsbremse in einer zweiten Funktion auch noch für die Feststellbremse genutzt und wird diese auch in der Baugruppe Seitendeckel untergebracht, ergibt sich eine besonders vorteilhafte Anordnung und auch eine gute Zugängigkeit für die Feststellbremse. Bis auf die Ölführung ist kein Bauaufwand außerhalb der Getriebeanlage für die notwendige Feststellbremse erforderlich.

Wird zusätzlich zu den in solchen Getriebeanlagen bekannten Sekundärretardern noch ein Primärretarder angeordnet, ist es möglich, über einen wesentlich größeren Geschwindigkeitsbereich bis fast zur Schrittgeschwindigkeit herunter verschleißlos zu bremsen. Als Reibungsbremsen können dann z.B. bei einer Geschwindigkeit kleiner 6 km/h die in einem Schaltgetriebe an und für sich vorhandenen Schaltbremsen in einer zweiten Funktion als Reibungsbremsen mit verwendet werden. Primär- und Sekundärretarder werden besonders günstig in der Baugruppe Schaltgetriebe angeordnet.

Weitere Einzelheiten der Erfindung werden anhand von Zeichnungen und Ausführungsbeispielen erläutert.

Fig. 1    eine Getriebeanlage in schematischer Darstellung mit einem Sekundärretarder und zwei Reibungsbremsen jeweils am Antriebsrad vom Summierungsgetriebe ;

Fig. 2    die Baugruppe Seitendeckel und Reibungsbremse ;

Fig. 3    eine Reibungsbremse mit Feststellbremseinrichtung im Halbschnitt ;

Fig. 4    eine Getriebeanlage nach Fig. 1, jedoch mit je einem Sekundär- und Primärretarder und Schaltbremsen mit zugeordneten Proportionalventilen ;

Fig. 5    eine elektro-hydraulische Bremsanordnung nach dem zweiten Ausführungsbeispiel (Fig. 4) ;

Fig. 6    ein Bremsmomentverlauf mit Primär- und Sekundärretarder nach dem zweiten Ausführungsbeispiel;

Fig. 7    ein Bremsleistungsdiagramm nach dem zweiten Ausführungsbeispiel.

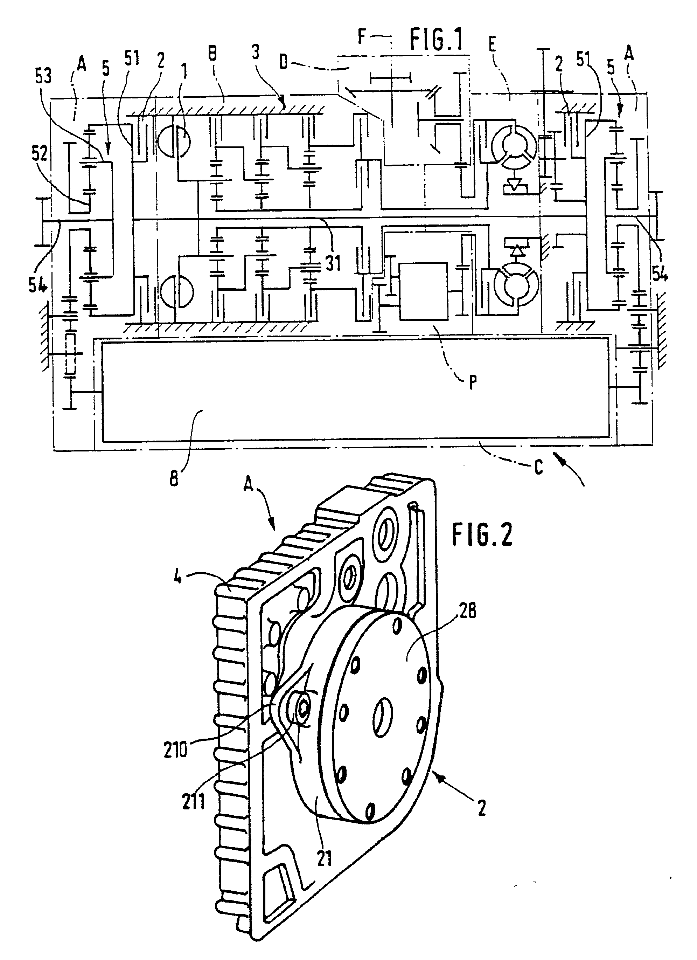

In der Getriebeanlage nach Fig. 1 ist in einer Baugruppe B das Schaltgetriebe 3 und ein Sekundärretarder 1 und in der Baugruppe A, die zweimal vorhanden ist, je ein Seitendeckel mit dem Summierungsgetriebe 5 und der Reibungsbremse 2 dargestellt. Die weiteren Baugruppen sind das Lenkgetriebe C, der Antrieb D, der Drehmomentwandler E und die Pumpeneinheit P, die mit den nicht dargestellten Baugruppen Lüftertriebe, Getriebesteuerung und Gehäuseeinsatz die Getriebeanlage bilden.

Die Fig. 2 zeigt die Baugruppe A. Am Seitendeckel 4 ist innen das Gehäuse 21 der Reibungsbremse 2 über Schrauben 211 in Verbindung mit Lageraugen 210 befestigt, so daß mit dem Abziehen der Baugruppe A die Reibungsbremse 2 nach Lösen dieser Schrauben 211 zugängig ist. Innerhalb des Seitendeckels 4 ist noch das Summierungsgetriebe 5 angeordnet, das infolge der dargestellten Reibungsbremse in dieser Fig. nicht erkennbar ist.

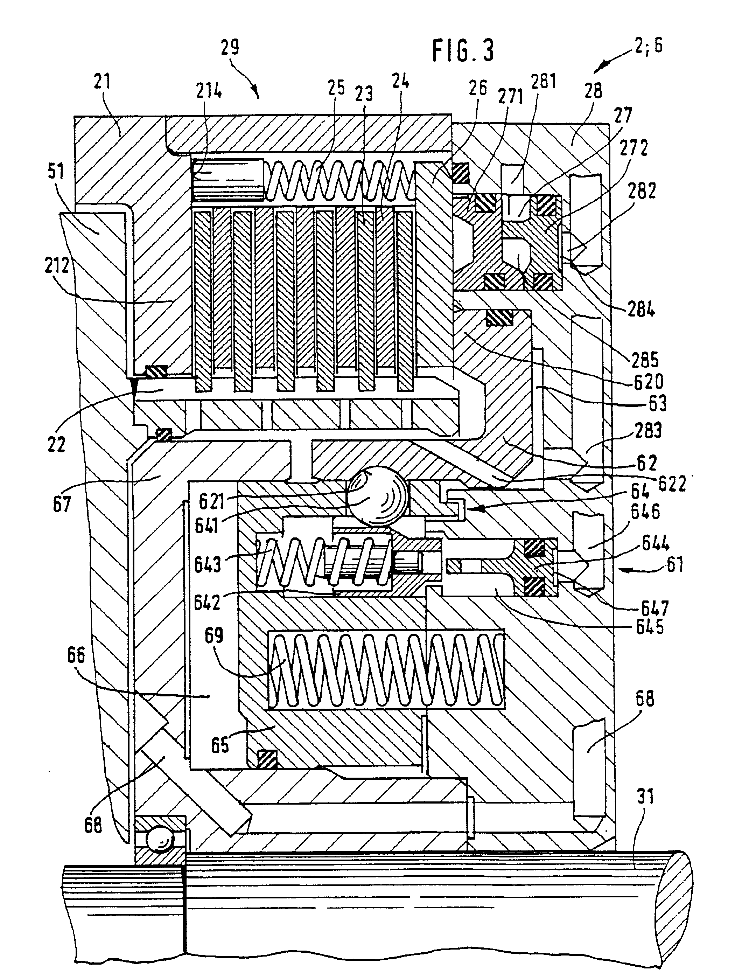

In einem Halbschnitt nach Fig. 3 ist als Beispiel eine kombinierte Reibungs- und Feststellbremse 2/6 dargestellt. Der Innenlamellenträger 22 ist mit dem Antriebsrad — Hohlrad 51 — des Summierungsgetriebes 5, z.B. durch Schweißen, fest verbunden. Die Außenlamellen 24 der kombinierten Reibungs- und Feststellbremse 2/6 sind an dem lamellenträgerartig ausgebildeten Gehäuse 21 angeordnet. Dieses hat noch einen nach innen gerichteten Bund 212, an dem sich die Lamellen (Innenlamellen 23 und Außenlamellen 24) abstützen. Im Bereich der Mitnahmeverzahnung von den Außenlamellen sind über den Umfang verteilt Rückstellfedern 25 angeordnet, die sich am Bund 214 des Gehäuses 21 und an der Endlamelle 26 abstützen. Die Bremse 2 wird durch diese Federn 25 bei Nichtbeaufschlagung in die geöffnete Stellung gedrückt. Im Bereich des Gehäusedeckels 28 nahe der Endlamelle 26 ist ein Kolbenraum 27 angeordnet mit den Kolben 271 und 272 eines Zweikreissystems für die Beaufschlagung der Betriebsbremse.

In der gleichen axialen Ebene, jedoch radial innen im gleichen Gehäuse ist noch eine Feststell- und Löseeinrichtung 61 einer Feststellbremse 6 angeordnet. Ein Kolben 62 mit nach radial außen gerichteten Kragen 620 ist in einem Kolbenraum 63 im Gehäusedeckel 28 so angeordnet, daß er mit dem Kragen 620 gleichfalls auf die Endlamelle 26 der Reibungsbremse 2 wirken kann. Über eine lösbare Mitnahmeeinrichtung 64, die in einem zweiten Kolben 65 angeordnet ist, sind die beiden Kolben 62, 65 verbunden. Die Mitnahmeeinrichtung 64 besteht im wesentlichen aus im Kolben 65 gelagerten Kugeln 641, die mit im Kolben 62 angeordneten Kugelkalotten 621 zusammenwirken. Der Kolbenraum 66 für den zweiten Kolben 65 wird von einem radial innenliegenden, topfförmigen Gehäuse 67 gebildet. Zur Mitnahmeeinrichtung 64 gehören noch ein Druckring 642, der von Druckfedern 643 gedrückt die Kugeln 641 in der Mitnahmestellung hält. Entgegen der Wirkung der Druckfedern 643 ist noch ein dritter Kolben 644 in einem Kolbenraum 645 im Gehäusedeckel 28 angeordnet zur Lösung der Mitnahmeeinrichtung 64. Im Gehäusedeckel 28 befindet sich noch die Kühlleitung 283, über die Kühlöl — Getriebeöl — zur Kühlung der Bremse 2 zumindest während des Bremsvorganges über den Kolbenraum 63 und die Kanäle 622 im Kolben 62 zugeleitet wird.

Die Bremsanlage wirkt wie folgt : Nach der Betätigung der Bremse wird bei Normalbremsungen in bekannter Weise zunächst der Retarder 1 mit Getriebeöl befüllt ; damit wird die Abtriebswelle 31 vom Schaltgetriebe 3 abgebremst. Die Wirkung dieser Abbremsung wirkt über die Summierungsgetriebe 5 auch auf beide Getriebeabtriebswellen 54. Bei Notbremsungen oder nach Unterschreitung eines vorgegebenen Bremsmomentes vom Retarder 1 wird auch die Betriebsbremse — Reibungsbremse 2 — mit betätigt. Dabei wird von einer Druckmittelquelle (Pumpe, Druckbehälter) kommendes Drucköl z.B. über die Leitungen 281 und 282 den Druckräumen 284 und 285 zugeführt. Das Drucköl kann Getriebeöl sein oder auch Bremsöl, das von einer separaten Druckmittelquelle allein für die Reibungsbremse 2 gefördert wird. Damit drückt der Kolben 271 und bei Ausfall im Druckraum 285 auch der Kolben 272 die Endlamelle 26 entgegen der Druckfeder 25 in die Bremsstellung, so daß der Innenlamellenträger 22, der am Hohlrad 51 angeordnet ist, über die Außen- und Innenlamellen 24, 23 abgebremst wird. Da die Hohlräder 51 der Summierungsgetriebe 5 mit der Abtriebswelle 31 des Schaltgetriebes drehfest verbunden sind, addiert sich die Bremswirkung der Reibungsbremse 2 zur Bremswirkung des Retarders 1.

In der offenen Stellung des Handbremsventils, also auch während der Wirkung der Reibungsbremse 2, wird Drucköl über die Leitung 68 in den Kolbenraum 66 gefördert, so daß der Kolben 65 gegen den Druck der Federn 69 in die rechte Endlage gedrückt wird. Über die von der Mitnahmeeinrichtung 64 in Mitnahmestellung gehaltenen Kugeln 641 wird der Kolben 62 gleichfalls in die rechte Endlage verstellt, so daß der Kragen 620

3

die Öffnungsstellung der Endlamelle 26 über die Feder 25 ermöglicht.

Bei Ausfall des Bremsöldruckes oder dem Schließen des Handbremsventils — Parkstellung — wird der Kolbenraum 66 entlüftet, und die starken Federn 69 bewirken eine Verstellung des Kolbens 65 nach links. Über die Mitnahmeeinrichtung 64, insbesondere die Kugeln 641, wird der Kolben 62 mitgenommen, und der Kragen 620 drückt für eine Feststellung oder Notbremsung gegen die Endlamelle 26. In der bereits beschriebenen Weise erfolgt damit eine Abbremsung der Getriebeabtriebswellen 54 und über das nicht dargestellte Seitenvorgelege der beiden Ketten des Fahrzeuges.

Wird dem Kolbenraum 66 durch Öffnen des Handbremsventils wieder Drucköl zugeführt, erfolgt in der bereits beschriebenen Weise die Verstellung des Kolbens 65 und 62 nach rechts, und die Bremsen werden gelöst. Aber auch nach einer Notbremsung, verbunden mit dem Ausfall der Druckanlage, ist es möglich, die Bremse zu lösen. Dafür ist es notwendig, über eine kleine z.B. Handpumpe (nicht dargestellt) in der Leitung 646 und im Druckraum 647 einen Druck aufzubauen, so daß über den Kolben 644 entgegen der Druckfedern 643 der Druckring 642 nach links verschoben wird. Damit werden die Kugeln 641 aus der Mitnahmestellung herausgedrückt, weil der Kolben 65 von den Federn 69 gegen den Endanschlag gedrückt wird. Die Federn 25 können nun die Endlamelle 26 und den Kolben 62 in die Öffnungsstellung verschieben. Der Druckraum 647 kann sofort wieder entlüftet werden. Bei der nächstfolgenden Beaufschlagung des Kolbens 65 mit Drucköl bewegt sich dieser wieder nach rechts, und durch die Federn 643 wird der Druckring 642 verschoben, und durch die Kugeln 641 ist die formschlüssige Verbindung mit dem Kolben 62 wieder hergestellt.

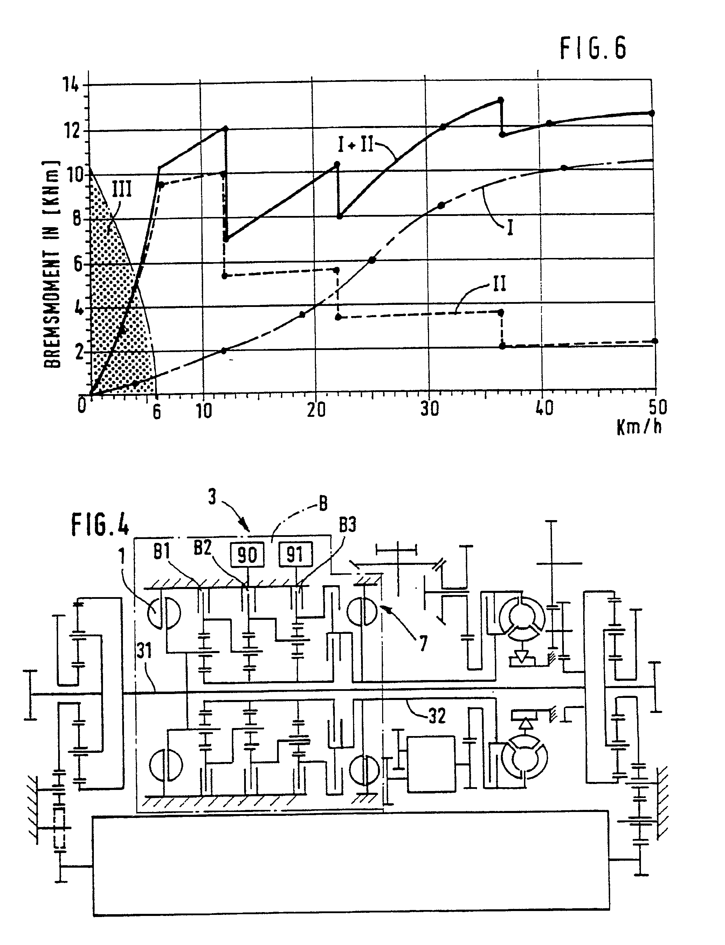

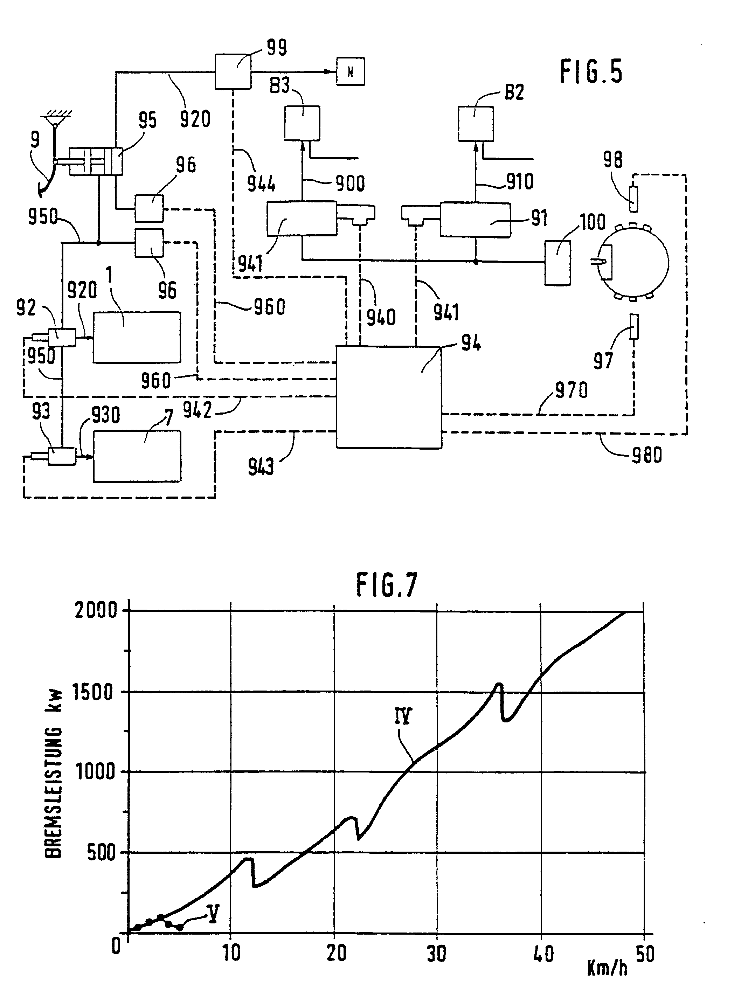

In einem zweiten Ausführungsbeispiel nach Fig. 4 ist neben dem in Fig. 1 schon dargestellten Sekundärretarder 1 noch ein Primärretarder 7 innerhalb der Baugruppe B mit dem Schaltgetriebe 3 angeordnet. Als Reibungsbremsen für den Geschwindigkeitsbereich kleiner 6 km/h werden die Schaltbremsen B2 und/oder B3 als Reibungsbremsen mitbenutzt, die im ersten Gang ja geöffnet sind. Dazu ist es nötig, wie die Fig. 5 zeigt, eine zweite Zuleitung 900, 910 mit je einem Proportionalventil 90, 91 für jede Bremse B2, B3 anzuordnen. Über diese Leitungen kann Druckflüssigkeit, z.B. Getriebeöl, von der bestehenden Schaltdruck-Versorgungseinrichtung, z.B. Pumpe, oder einem Druckbehälter 100 an die Reibungsbremsen B2, B3 geleitet werden. Gesteuert werden die Proportionalventile 90, 91 über die Steuerleitung 940 und 941 vom elektronischen Steuergerät 94. Die Fahrzeuggeschwindigkeit wird über die Drehzahl der Getriebeabtriebswelle ermittelt und von Sensoren 97 und 98 über die Leitungen 970, 980 der elektronischen Einheit zugeleitet. Der über das Bremspedal 9 erzeugte Druck im Tandem-Hauptzylinder 95 wird über die Sensoren 96 in die Leitungen 960 als Informationen dem elektronischen Steuergerät 94 zugeleitet. Im elektronischen Steuergerät erfolgt die gesamt Signalverarbeitung für die gesamte Steuerung nach der gespeicherten Logik. Deshalb sind auch das Proportionalventil 92 für den Sekundärretarder 1 über die Leitung 942, das Proportionalventil 93 für den Primärretarder 7 über die Leitung 943 und das Magnetventil 99 für die Not- und Feststellbremse über die Leitung 944 an das elektronische Steuergerät 94 angeschlossen. Von dem Hauptzylinder 95 führt noch eine Druckleitung zu den Proportionalventilen 92 und 93, die dem Primärretarder 7 und Sekundärretarder 1 zugeordnet sind.

Aus Fig. 6 ist die Wirkungsweise einer solchen elektrohydraulisch geregelten Bremsanlage erkennbar. Während bei Geschwindigkeiten oberhalb von z.B. 6 km/h die Aktivierung der beiden Strömungsbremsen in der Regel ausreichend ist — Kurve I und II —, muß bei Geschwindigkeiten unter diesem Wert oder nach Erreichen dieses Wertes eine oder beide Lamellenbremsen zugeschaltet werden, damit eine sichere Abbremsung bis zum Stillstand erfolgt. Die Wirkung der einzelnen Strömungsbremsen — Sekundärretarder 1, Primärretarder 7 — sind aus den Kurven I und II ableitbar. Der Wirkbereich der Reibungsbremse ist mit III dargestellt.

Für eine Notbremsung werden die beiden Strömungsbremsen 1, 7 direkt über die hydraulische Leitung 950 betätigt, und über Leitung 920 und Ventil 99 wird die Feststellbremse N, z.B. eine Federspeicherbremse, aktiviert.

Wie aus Fig. 7 leicht erkennbar, wird der größte Anteil der Bremsleistung durch die verschleißfreien Bremsen Sekundärretarder 1 und Primärretarder 7 erbracht — Kurve IV —. Der Anteil der Reibungsbremse — Kurve V — ist sehr gering.

Die Erfindung ist nicht allein auf die dargestellten Beispiele beschränkt, sondern es ist auch möglich, einen Primär- 7 und Sekundärretarder 1 in Verbindung mit der Nutzung der Gangschaltbremsen B1, B2 und B3 als Reibungsbremsen nur hydraulisch zu betreiben.

Dabei wird die Bremsbetätigung für die verschleißfreien Strömungsbremsen 1, 7 und die Reibungsbremsen B1, B2, B3 nur über das Bremspedal 9 bewirkt.

Bezugszeichen

| | |
|---|---|
| 1 | Sekundärretarder |
| 2 | Reibungsbremse |
| 21 | Gehäuse |
| 210 | Lagerauge |
| 211 | Schrauben |
| 212 | Bund |
| 214 | Bund |
| 22 | Innenlamellenträger |
| 23 | Innenlamellen |
| 24 | Außenlamellen |
| 25 | Rückstellfeder |
| 26 | Endlamellen |
| 27 | Kolbenraum |
| 271 | Kolben |
| 272 | Kolben |
| 28 | Gehäusedeckel |
| 281 | Leitung |
| 282 | Leitung |
| 283 | Kühlleitung |
| 284 | Druckraum |
| 285 | Druckraum |
| 3 | Schaltgetriebe |
| 31 | Abtriebswelle |
| 4 | Seitendeckel |
| 5 | Summierungsgetriebe |
| 51 | Hohlrad |
| 52 | Sonnenrad |
| 53 | Planetenträger |
| 54 | Getriebeabtriebswellen |
| 6 | Feststellbremse |
| 61 | Feststell- und Löseeinrichtung |
| 62 | Kolben |
| 620 | Kragen |
| 621 | Kugelkalotte |

| | |
|------|------|
| 622 | Kanäle |
| 63 | Kolbenraum |
| 64 | Mitnahmeeinrichtung |
| 641 | Kugeln |
| 642 | Druckring |
| 643 | Druckfeder |
| 644 | Dritter Kolben |
| 645 | Kolbenraum |
| 646 | Leitung |
| 647 | Druckraum |
| 65 | Zweiter Kolben |
| 66 | Kolbenraum |
| 67 | Gehäuse |
| 68 | Leitung |
| 69 | Feder |
| 7 | Primärretarder |
| 8 | Überlagerungs-Lenkgetriebe |
| 9 | Bremspedal |
| 90 - 93 | Proportionalventile |
| 900 | Druckleitung |
| 910 | Druckleitung |
| 920 | Druckleitung |
| 94 | Elektronisches Steuergerät |
| 940 - 943 | Steuerleitung |
| 95 | Tandem-Hauptzylinder |
| 950 | Druckleitung |
| 96 | Sensor |
| 960 | Steuerleitung |
| 97 | Sensor |
| 970 | Leitung |
| 98 | Sensor |
| 980 | Leitung |
| 99 | Magnetventil |
| 100 | Pumpe/Druckbehälter |

| A | Baugruppe Seitendeckel |
| B | Baugruppe Schaltgetriebe |
| C | Baugruppe Überlagerungs-Lenkgetriebe |
| D | Baugruppe Antrieb |
| E | Baugruppe Drehmomentwandler |
| P | Pumpen |
| F | Fahrzeuglängsachse |
| B1 | Reibungsbremse - Schaltbremse |
| B2 | Reibungsbremse - Schaltbremse |
| B3 | Reibungsbremse - Schaltbremse |

**Patentansprüche**

1. Bremsanlage für Vollkettenfahrzeuge mit je einem quer zur Fahrzeuglängsachse (F) angeordneten Schalt- (3) und Überlagerungs-Lenkgetriebe (8) und zwei nahe der beiden Getriebeabtriebswellen (54) angeordneten Summierungsgetriebe (5), wobei das Schalt- und das Überlagerungs-Lenkgetriebe (3, 8) sowie die Summierungsgetriebe (5) und noch weitere Einrichtungen, wie der Antrieb (D), der Drehmomentwandler (E) und die Pumpen (P), als Baugruppen (A, B, C, D, E, P) eine Getriebeanlage bilden und innerhalb oder außen an einem gemeinsamen Gehäuse, angeordnet sind und die Bremsanlage zumindest aus je einem Retarder (1) und einer Reibungsbremse (2) besteht und über eine Bremsbetätigungseinrichtung (9) erst der verschleißfreie Teil der Bremsanlage (Retarder 1) und von deren Bremsmoment abhängig die Reibungsbremsen (2) aktiviert werden, dadurch **gekennzeichnet**, daß die gesamte Bremsanlage (1, 2) innerhalb der Getriebeanlage (A, B, C, D, E, P) im Kraftfluß vor den beiden Summierungsgetrieben (5) angeordnet ist.

2. Bremsanlage für Vollkettenfahrzeuge nach Anspruch 1, dadurch **gekennzeichnet**, daß je eine Reibungsbremse (2) zwischen dem Antriebsrad (Hohlrad 51) des Summierungsgetriebes (5) und dem Seitendeckel (4) angeordnet ist.

3. Bremsanlage für Vollkettenfahrzeuge nach Anspruch 2, dadurch **gekennzeichnet**, daß das Gehäuse (21) der Reibungsbremse (2) über Befestigungsschrauben (211) mit dem Seitendeckel (4) verbunden ist.

4. Bremsanlage für Vollkettenfahrzeuge nach Anspruch 3, dadurch **gekennzeichnet**, daß die Reibungsbremse eine nasse Lamellenbremse (2) ist und das Lamellenpaket (29) in einer zweiten Funktion in Verbindung mit einer Feststell- und Löseeinrichtung (61) als Feststellbremse (6) genutzt wird.

5. Bremsanlage für Vollkettenfahrzeuge nach Anspruch 4, dadurch **gekennzeichnet**, daß
— die kombinierte Reibungs- und Feststellbremse (2/6) in einem zylinderförmigen Gehäuse (21), das mit einem Deckel (28) verschlossen über Lageraugen (210) und Schrauben (211) mit dem Seitendeckel (4) fest verbunden angeordnet ist,
— das Lamellenpaket (29) im Gehäuse (21) und die Betätigungskolben (271, 272) und die Druckräume (284, 285) im Deckel (28) radial außen angeordnet sind, und daß die Feststell- und Löseeinrichtung (61) in der Ebene des Lamellenpaketes (29) und des Deckels (28) radial innen angeordnet ist,
— der zweite Kolben (65) der Feststell- und Löseeinrichtung (61) so angeordnet ist, daß er mit Druckmittel beaufschlagt über eine Mitnahmeeinrichtung (64) einen ersten Kolben (62) in die Öffnungsstellung für die Feststellbremse (6) bewegt und bei entlüftetem Kolbenraum (66) zwischen Deckel (28) und Kolben (65) angeordneten Druckfedern (69) über die Mitnahmeeinrichtung (64) ein Kragen (620) des Kolbens (62) auf die Endlamelle (26) drückt und das Lamellenpaket (29) kraftschlüssig das Antriebsrad (Hohlrad 51) des Summierungsgetriebes (5) mit dem Seitendeckel (4) des Getriebes über das Gehäuse (21) der kombinierten Reibungsund Feststellbremse (2/6) verbunden ist.

6. Bremsanlage für Vollkettenfahrzeuge nach Anspruch 1, dadurch **gekennzeichnet**, daß zwei Retarder (1, 7) angeordnet sind und die im Schaltgetriebe (3) vorhandenen Gangschaltbremsen (B1, B2, B3) in einer zweiten Funktion als Reibungsbremsen benutzt werden.

7. Bremsanlage für Vollkettenfahrzeuge nach Anspruch 6, dadurch **gekennzeichnet**, daß auf der Eingangswelle (32) zum Schaltgetriebe (3) ein Primär- (7) und auf der Abtriebswelle (31) zum Summierungsge-

EP 0 378 527 B1

triebe (5) ein Sekundärretarder (1) angeordnet sind.

8. Bremsanlage für Vollkettenfahrzeuge nach Anspruch 7, dadurch **gekennzeichnet,** daß der Primär- und Sekundärretarder (7, 1) Bestandteil der Baugruppe (B), zusammen mit dem Schaltgetriebe (3), sind.

## Claims

1. A brake system for full-track vehicles comprising a change-speed gear (3) and a superimposed steering gear (8) arranged transverse to the longitudinal axis (F) of the vehicle and two summing gears (5) arranged in the vicinity of the two gear output shafts (54), the change-speed gear and the superimposed steering gear (3, 8) as well as the summing gears (5) and further devices such as the drive (D), torque converter (E) and pumps (P) forming a gearing system as structural units (A, B, C, D, E, P) and being arranged inside or outside on a common housing and the brake system comprising at least one retarder (1) and one friction brake (2) respectively and via a brake acutation device (9) the wear-resistant part of the brake system (retarder 1) firstly being actuated and, as a function of their braking moment, the friction brakes (2), characterised in that the entire brake system (1, 2) is arranged inside the gearing system (A, B, C, D, E, P) upstream of the two summing gears (5) in the direction of the power flux.

2. A brake system for full-track vehicles according to claim 1, characterised in that a friction brake (2) is arranged in each case between the drive wheel (hollow wheel 51) of the summing gear (5) and the side lid (4).

3. A brake system for full-track vehicles according to claim 2, characterised in that the housing (21) of the friction brake (2) is connected via securing screws (211) with the side lid (4).

4. A brake system for full-track vehicles according to claim 3, characterised in that the friction brake is a multi-disc brake (2) and disc set (29) is used in a second function in connection with a locking and releasing device (61) as a locking brake (6).

5. A brake system for full-track vehicles according to claim 4, characterised in that
— the combined friction and locking brake (2/6) is arranged in a cylindrical housing (21), which sealed with a lid (28) is securely connected via bearing eyelets (210) and screws (211) with the side lid (4),
— the disc set (29) in the housing (21) and the actuating pistons (271, 272) and pressure chambers (284, 285) in the lid (28) are arranged radially on the outside, whereas the locking and releasing device (61) is arranged radially on the inside in the plane of the disc set (29) and the lid (28),
— the second piston (65) of the locking and releasing device (61) is arranged in such a manner that, when acted upon by pressure medium, it displaces a first piston (62) via a carrier device (64) into the open position for the locking brake (6) and, when the piston chamber (66) is ventilated, pressure springs arranged between the lid (28) and piston (65) press a collar (620) of the piston (62) via the carrier device (64) onto the end disc (26) and the disc set (29) is frictionally connected with the drive wheel (hollow wheel 51) of the summing gear (5) and with the side lid (4) of the gearing via the housing (21) of the combined friction and locking brake (2/6).

6. A brake system for full-track vehicles according to claim 1, characterised in that two retarders (1, 7) are provided and the gear-shifting brakes (B1, B2, B3) provided in the change-speed gears (3) are used in a second function as friction brakes.

7. A brake system for full-track vehicles according to claim 6, characterised in that a primary retarder (7) is arranged on the input shaft (32) to the change-speed gear (3) and a secondary retarder (1) is arranged on the output shaft (31) to the summing gear (5).

8. A brake system for full-track vehicles according to claim 7, characterised in that the primary and secondary retarders (7, 1) are component parts of the structural unit (B), together with the change-speed gear (3).

## Revendications

1. Dispositif de freinage pour véhicules chenillés comportant, dans une disposition transversale par rapport à l'axe longitudinal (F) du véhicule, une boîte de vitesses (3), un mécanisme différentiel de direction (8) et deux mécanismes sommateurs (5) disposés à proximité des deux arbres de sortie (54) de la transmission, où la boîte de vitesses (3) et le mécanisme différentiel de direction (8), ainsi que les mécanismes sommateurs (5) et encore d'autres dispositifs tels que l'entraînement d'entrée (D), le convertisseur de couple (E) et les pompes (P), sont des sous-ensembles (A, B, C, D, E, P) qui forment une transmission et qui sont montés intérieurement ou extérieurement sur un carter commun, et où le dispositif de freinage se compose au moins d'un ralentisseur (1) et d'un frein à friction (2) et où un organe de commande de freinage (9) actionne d'abord la partie ne s'usant pas du dispositif de freinage (ralentisseur 1) et, selon le couple de freinage, les freins à friction (2), caractérisé en ce que tout le dispositif de freinage (1, 2) disposé dans la transmission (A, B, C, D, E, P) se trouve en amont des deux mécanismes sommateurs (5), par rapport au flux des forces.

2. Dispositif selon la revendication 1, caractérisé en ce qu'un frein à friction (2) est disposé entre la roue motrice (roue à denture intérieure 51) de chaque mécanisme sommateur (5) et le couvercle latéral correspondant (4).

3. Dispositif selon la revendication 2, caractérisé en ce que le boîtier (21) du frein à friction (2) est fixé au couvercle latéral (4) au moyen de vis de fixation (211).

4. Dispositif selon la revendication 3, caractérisé en ce que le frein à friction est un frein multidisque humide (2) et en ce que le paquet de disques (29) est utilisé, dans une seconde fonction, comme frein de stationnement (6) en combinaison avec un dispositif de blocage et de libération (61).

5. Dispositif selon la revendication 4, caractérisé en ce que :
— le frein combiné à friction et de stationnement (2/6) est disposé dans un boîtier cylindrique (21) fermé par un couvercle (28) et fixé au couvercle latéral (4) au moyen d'oeillets de support (210) et de vis (211),
— le paquet de disques (29), dans le boîtier (21), et le piston de commande (271, 272) et les chambres de pression (284, 285), dans le couvercle (28), se trouvent dans des positions radiales extérieures, et en ce que le dispositif de blocage et de libération (61) se trouve dans une position radiale intérieure dans le plan du paquet de disques (29) et du couvercle (28),
— le second piston (65) du dispositif de blocage et de libération (61) est agencé de telle façon que, lorsqu'il est actionné par un fluide de pression, il déplace un premier piston (62) au moyen d'un dispositif entraîneur (64) jusqu'à la position ouverte du frein de stationnement (6) et que, lorsque la chambre (66) du piston est déchargée, des ressorts de compression (69) disposés entre le couvercle (28) et le piston (65) poussent un collet (620) du piston (62) contre le disque extrême (26) au moyen du dispositif entraîneur (64) et que le paquet de disques (29) relie par friction la roue motrice (roue à denture intérieure 51) du mécanisme sommateur (5) au couvercle latéral (4) de la transmission par l'intermédiaire du boîtier (21) du frein combiné à friction et de stationnement (2/6).

6. Dispositif selon la revendication 1, caractérisé en ce qu'il comporte deux ralentisseurs (1, 7) et en ce que les freins de commande des vitesses (B1, B2, B3) dans la boîte de vitesses (3) sont utilisés dans une seconde fonction comme freins à friction.

7. Dispositif selon la revendication 6, caractérisé en ce qu'elle comporte un ralentisseur primaire (7) sur l'arbre d'entrée (32) de la boîte de vitesses (3) et un ralentisseur secondaire (1) sur l'arbre de sortie (31) allant au mécanisme sommateur (5).

8. Dispositif selon la revendication 7, caractérisé en ce que le ralentisseur primaire et le ralentisseur secondaire (7,1) font partie du sous-ensemble (B) comprenant la boîte de vitesses (3).

FIG.1

FIG.2

FIG. 3

FIG. 6

FIG. 4

FIG.5

FIG.7